Europäisches Patentamt

European Patent Office

Office européen des brevets

(11) Numéro de publication: **0 056 211**
A2

## (12) DEMANDE DE BREVET EUROPEEN

(21) Numéro de dépôt: 81402095.4

(22) Date de dépôt: 31.12.81

(51) Int. Cl.³: **A 21 D 6/00**

(30) Priorité: 08.01.81 FR 8100215

(43) Date de publication de la demande: 21.07.82
Bulletin 82/29

(84) Etats contractants désignés: **BE CH DE FR GB IT LI LU NL**

(71) Demandeur: **GRANDES BOULANGERIES ASSOCIEES G.B.A. Société anonyme, 3 avenue Marceau, F-75016 Paris (FR)**

(72) Inventeur: **Nourigeon, André, Route du Tour de l'Etang Quartier St Jean, F-13800 Istres (FR)**

(74) Mandataire: **Combe, André et al, CABINET BEAU DE LOMENIE 55 rue d'Amsterdam, F-75008 Paris (FR)**

(54) Procédé de préparation d'une pâte à pain surgelée de longue conservation et procédé de décongélation de pâte à pain surgelée.

(57) La présente invention concerne un procédé de préparation d'une pâte à pain pouvant être surgelée en vue de sa longue conservation, caractérisé en ce que la levure utilisée a été soumise au préalable à une stabilisation par surgélation, et que les opérations de frasage et de pétrissage sont réalisées en un minimum de temps sans que la pâte atteigne la température de 20°C, après quoi la pâte obtenu est refroidie rapidement jusqu'à ce que sa température, à coeur, atteigne au moins —7°C; la présente invention concerne également un procédé de décongélation biologique de pâte à pain surgelée.

EP 0 056 211 A2

ACTORUM AG

Procédé de préparation d'une pâte à pain surgelée de longue conservation et procédé de décongélation de pâte à pain surgelée.

La présente invention concerne un procédé pour la préparation d'une pâte à pain surgelée susceptible de se conserver pendant une longue durée ; elle concerne également un procédé permettant de décongeler, rapidement et dans des conditions fermentescibles optimales, de la pâte à pain préalablement surgelée.

Le secteur de la technique considérée est celui de la boulangerie et plus particulièrement de la préparation de la pâte à pain, avant et après conservation.

La conservation par le froid a fait l'objet de nombreuses recherches, notamment dans le domaine alimentaire. En ce qui concerne celle du pain, on sait comment le garder une fois cuit. Mais, avant la cuisson, sa conservation pose de nombreux problèmes dus à la fermentation de la pâte qui ne peut être contrôlée, une fois la réaction commencée. Le froid n'inhibe pas celle-ci, à moins de bloquer les tissus avant l'amorçage. Pour cela, on a proposé un procédé où l'on congèle les différents composants de la pâte, en dehors de la farine, à savoir : levure, sel, malt, à -10, -5°C, préférentiellement, et l'on opère un frasage sans incorporation de levure au mélange, celle-ci n'étant introduite que lors du pétrissage. Celui-ci est ensuite divisé en trois étapes : 5 min sans levure, 7-20 min avec levure, 2-3 min avec sel. Enfin, la congélation est effectuée préférentiellement à -40°C, sans ventilation. Lors de l'utilisation de la pâte, en vue de la fermentation, on procède à une remise en température progressive des pâtons, d'abord au moins 12 h à -10,0°C, puis à la température de fermentation.

Mais ce procédé présente certains inconvénients :

- la congélation du sel et du malt a pour effet, lors de la cuisson finale, d'augmenter la porosité de la pâte,

- le procédé est long du fait de la nécessité de n'ajouter la levure qu'au stade du pétrissage,

- le procédé implique enfin une décongélation lente ce qui allonge la durée nécessaire pour la mise ne oeuvre des pâtons surgelés et qui risque d'entraîner une certine dégradation de la pâte.

La présente demande vise à surmonter ces divers inconvénients.

Il a été trouvé tout d'abord que l'obtention d'une pâte à pain surgelée de bonne qualité pouvait avantageusement être réalisée en utilisant une levure "stabilisée par surgélation".

On a pu mettre en évidence le fait que lorsqu'une levure biologique - telle que la levure normalement utilisée pour la préparation du pain - était soumise à de basses températures (inférieures à environ -15°C) pendant des durées croissantes certains composants de ces levures perdaient progressivement leur pouvoir fermentiscible (mesuré à température ambiante) alors que les autres composants de ces levures conservaient ou même amélioraient leur pouvoir fermentiscible.

Selon la présente invention, il convient de soumettre les levures biologiques à des températures suffisamment basses pendant une durée suffisante pour amener la destruction, dans lesdites levures, de tous les composants susceptibles d'être tués par ces basses températures.

Ainsi, avec la plupart des levures connues, "la stabilisation par surgélation" desdites levures nécessite :
- environ 48 h à une température d'environ -15°C,
- environ 24 h à une température d'environ -40°C,
- environ 20 min à une température d'environ -190°C.

Dans la pratique, l'utilisation de températures trop basses (inférieures à -80°C environ) étant difficilement concevable, il est recommandé d'obtenir les levures "stabilisées par surgélation" en mettant les pains de levure dans une atmosphère dont la température est comprise entre -15 et -40°C pendant une durée d'au moins 24 h.

La levure "stabilisée par surgélation" étant, lorsqu'elle est à basse température (par exemple -20°C), très dure et pratiquement non miscible avec les autres ingrédients du pain, doit être ramenée à température ambiante avant son emploi. Il est cependant important de faire en sorte que la température moyenne du pain de levure réchauffé ne dépasse pas environ 15°C, la température la plus élevée dudit pain de levure ne devant en aucun cas dépasser 20°C.

La levure stabilisée ayant été "réchauffée" comme décrit ci-dessus, le pain est préparé de façon classique en réalisant les opérations de frasage puis de pétrissage.

On notera cependant lors de la préparation de la pâte les caractéristiques suivantes :

a) les quantités de levure à utiliser sont supérieures aux quantités de levure dont on recommande habituellement l'emploi ; cette caractéristique est normale du fait que lors de la surgélation une partie de la levure a perdu son activité ; on admet généralement que les quantités de levure à utiliser sont au moins deux fois les quantités normalement employées (par exemple 50 à 70 g de levure surgelée par kg de farine) ;

b) dans les composants de la pâte on doit trouver des quantités suffisantes de gluten et de malt ; c'est pourquoi on ajoutera avantageusement aux ingrédients qui constituent la pâte :

. de 0,5 à $1°/_{oo}$ en poids, par rapport à la farine, de gluten

. de 0,5 à 2% en poids, par rapport à la farine, de malt ; ce malt a pour rôle, lors de la fermentation ultérieure, d'augmenter l'activité diastasique de la pâte ;

c) sur le plan du procédé, les opérations de frasage et de pétrissage doivent être réalisées dans un minimum de temps (temps de 15 à 20 minutes pour le pétrissage) et dans des conditions telles que la température de la pâte ne dépasse pas une température d'environ 20°C.

La farine utilisée dans le procédé de la présente invention peut être une farine panifiable quelconque sans correction du tissu glutineux ; mais il est également possible d'utiliser une farine de valeur boulangère très faible (dont l'activité distasique est très faible ou nulle) qui serait considérée comme inutilisable pour la préparation du pain selon les techniques connues.

Lorsque la pâte à été obtenue elle est fractionnée en boules (ou cylindres) pour donner naissance à des pâtons de forme voulue. Ces pâtons sont ensuite soumis à une surgélation.

Cette surgélation consiste à mettre les pâtons dans des conditions telles que l'on amène, aussi rapidement que possible, leur température à coeur à être inférieure à -7°C. Cette surgélation peut par exemple s'effectuer en mettant les pâtons dans un air froid dont la température est maintenue entre -50 et -20°C.

Dès que ladite température (à coeur) de -7°C a été obtenue les pâtons peuvent être conditionnés soit isolément soit par paquet.

Ce conditionnement consiste à enfermer les pâtons dans un film de matière plastique (ou un film complexe), de préférence opaque, présentant une très grande imperméabilité vis-à-vis de la vapeur d'eau. Il convient en effet que la "teneur en eau" de ces pâtons, qui est lors de leur préparation d'environ 35% en poids, demeure au voisinage de cette valeur.

Il est possible que, du fait d'une longue durée de conservation des pâtons à basse température (par exemple -20°C) et de l'utilisation d'un film d'emballage trop perméable à la vapeur d'eau, les pâtons subissent un phénomène de déshydratation (analogue au phénomène bien connu de lyophilisation). Dans ce cas, on peut remédier à ce phénomène de deux façons : soit on augmente l'imperméabilité à la vapeur d'eau du film d'emballage, soit on enrobe les pâtons dans une couche de glace. Cette dernière technique est spécialement intéressante, dans l'état actuel des connaissances, lorsque les pâtons doivent être conservés pendant une durée au moins égale à six mois environ.

Les diverses étapes du procédé selon l'invention sont donc les suivantes :

I -     Dans une première étape, on surgèle la levure préalablement à la confection de la pâte. Bien entendu, à un échelon industriel, cette étape ne se situera pas avant chaque panification. Plutôt que de congeler "au coup par coup" une faible quantité de levure, on prévoira la mise à froid pour un grand nombre d'opérations identiques. En pratique, cette étape se situe lors de l'approvisionnement. Après livraison de la levure, celle-ci est placée au congélateur à une température telle que la levure atteigne autour de -18°C rapidement. Elle doit être maintenue à cette température 24 h au moins.

Puis, environ 24 heures avant la préparation de la pâte, on laisse ladite levure se réchauffer lentement jusqu'à une température d'environ 10°C.

II -     Dans une seconde étape, on effectue le frasage qui consiste à effectuer un mélange intime à vitesse moyenne de tous les composants de la pâte à pain, à l'exception du sel. Généralement, on emploie la farine, ou la farine et le gluten, l'eau, la levure, le malt et éventuellement les autres additifs. La vitesse préférentielle est de 30 tr/min et la durée de frasage d'environ 5 minutes.

La quantité de gluten est ajoutée à une farine de faible valeur boulangère dans un rapport de 0,5 à 1:1000, le gluten étant d'un degré de pureté égal à 90%.

III -                Dans une troisième étape, on pétrit le mélange obtenu précédemment entre 15 et 20 min environ, à une vitesse supérieure à celle du frasage, préférenteiellement à 60 tr/min. La température ambiante et la qualité de la farine employée font varier la durée du pétrissage en fonction inverse. Ainèi, en été, on pétrira le mélange moins longtemps qu'en hiver. Si l'on utilise une farine de faible valeur boulangère, on arrêtera aussi plus tôt le pétrissage.

A la fin du pétrissage, on incorpore la quantité de sel nécessaire à la même vitesse, préférentiellement de 60 tr/min, pendant une durée comprise entre 2 et 7 minutes. De même que précédemment, celle-ci est fonction inverse de la température ambiante et de la qualité de la farine employée.

Une variante de cette étape est destinée à la mise en oeuvre du procédé en pays chauds. Le but poursuivi étant de conserver une pâte qui n'a pas encore atteint le stade de la fermentation, il faut veiller à ne pas opérer à des températures trop élevées préjudiciables : la pâte ne doit pas être "à coeur" à plus de 20°C. On introduit une étape intermédiaire en cours de pétrissage et avant l'incorporation de sel. On procède à un bassinage de la quantité de sel nécessaire dans l'eau de coulage. Cette eau est celle traditionnellement utilisée en boulangerie lors de la préparation de la pâte pour refroidir celle-ci.

Une autre variante prévoit d'adjoindre de la glace en cours de pétrissage pour éviter une élévation de température de la pâte.

Les étapes ultérieures de pesage, boulage et façonnage sont traditionnelles et non inventives. L'homme de l'art les connaît.

Les pâtons sont ensuite amenés directement dans des chambres froides de façon à les réfrigérer à une température d'au moins -7°C (au coeur du pâton).

C'est au cours de cette opération que, en opérant dans une atmosphère sursaturée en vapeur d'eau, on peut revêtir les pâtons d'une couche de glace qui, comme il a été expliqué ci-dessus, sera très utile pour conserver lesdits pâtons pendant des durées au moins égales à environ six mois.

On effectue ensuite le conditionnement des pâtons dans des emballages, de préférence opaques, imperméables à la vapeur d'eau. Si, pour une raison ou pour une autre, on peut penser que, malgré les précautions prises, une certaine fermentation a commencé à se développer dans les pâtons (apparition de $CO_2$) il pourra y avoir intérêt, pour améliorer la conservation des pâtons, à balayer l'atmosphère qui se développe dans l'emballage soit en faisant le vide soit en balayant par un gaz inerte (azote).

Une fois le pâton mis en conditionnement adéquat, il est conservé et stocké dans des chambres traditionnelles maintenant une température préférentiellement comprise entre -15°C et -18°C. La livraison se fera aux conditions réglementaires en vigueur.

La présente invention concerne également un procédé pour la décongélation des pâtons ; ce procédé s'il est particulièrement utilisable lorsque les pâtons ont été préparés selon le procédé décrit ci-dessus peut également être mis en oeuvre vis-à-vis de n'importe quel pâton conservé à l'état surgelé (par exemple vers -20°C), et contenant des levures biologiques.

La décongélation biologique selon l'invention est caractérisée en ce que les pâtons, sortis de la chambre de conservation et de leur emballage, sont soumis à une température d'environ 90°C à 100°C en atmosphère saturée en vapeur d'eau pendant une durée de 3 à 7 minutes, de préférence environ 5 minutes, puis que l'atmosphère gazeuse humide et chaude entourant les pâtons est remplacée par de l'air à une température comprise entre 20 et 30°C, cette atmosphère étant maintenue jusqu'à ce que la température du pâton atteigne à coeur environ 20°C.

La fermentation amorcée dans ces conditions se poursuit comme connu jusqu'à ce que l'état de la pâte fermentée (et levée) apparaisse comme convenable au spécialiste.

Cette décongélation biologique présente l'avantage, d'une part, d'une très grande rapidité et, d'autre part, d'une grande régularité de la fermentation dans toute la masse du pain.

L'exemple non limitatif suivant illustre les deux aspects de la présente invention.

Exemple

Pour préparer 100 kg environ de pâte, on a pris les principaux composants dans les proportions suivantes approximatives :

| | | |
|---|---|---|
| farine de faible valeur boulangère | 100 | kg |
| eau | 60 | kg |
| gluten (90% de pureté) | 750 | g |
| malt | 1,6 | kg |
| sel | 20 | g |
| levure | 7,5 | kg. |

Les pains de levure utilisés pour la préparation de cette pâte avaient subi les traitements suivants :

- ils avaient été mis dans une atmosphère dont la température était maintenue à -40°C pendant une durée de 48 heures ;

- puis ils avaient été sortis du lieu de conservation et laissés à température ambiante (15°C) pendant environ 12 heures.

Le frasage des divers ingrédients a été effectué à 30 tr/min$^{-1}$ pendant 5 minutes, le pétrissage à 60 tr/min$^{-1}$ pendant 15 minutes, puis 2 minutes après incorporation du sel. Les pesage, boulage et façonnage sont alors effectués de manière usuelle pour réaliser des pâtons de 300 g chacun environ. On a ensuite trempé dans de l'eau fraîche et porté les pâtons à la température de -20°C pendant 25 minutes, avec ventilation d'air froid. La fin de l'opération se détecte par l'aspect extérieur du pâton formant un bloc compact. On met les pâtons en chambre de conservation à -18°C environ.

Les pâtons ont été ensuite empaquetés par 100 dans un film de polyéthylène.

Les pâtons peuvent ainsi être conservés pendant plus de six mois, à -20°C, en conservant toutes leurs propriétés.

Les pâtons sortis de leur emballage sont introduits dans une étuve réglée à 100°C et contenant une atmosphère saturée d'eau.

Au bout de 5 minutes, les pâtons sont sortis de l'étuve et introduits pendant environ 20 minutes dans une étuve dont l'atmosphère est maintenue à 25°C. On vérifie au bout de ce temps que la température au cœur du pâton est alors de 19°C.

8

Les pâtons ainsi décongelés sont soumis à une fermentation dans des conditions connues. On a constaté que cette durée de fermentation pouvait être de 20 à 40 minutes selon la température ambiante. Les pâtons sont alors cuits.

Bien entendu, sans sortir du cadre de l'invention, diverses modifications par des moyens équivalents peuvent être apportées par l'homme de l'art au procédé qui vient d'être décrit à titre d'exemple non limitatif.

R E V E N D I C A T I O N S
----------------------------------

1.          Procédé de préparation d'une pâte à pain pouvant être surgélée en vue de sa longue conservation, caractérisé en ce que :

- la levure utilisée a été "stabilisée par surgélation" en maintenant ladite levure à une température inférieure à -15°C pendant une durée suffisante ;

- après décongélation de ladite levure on a réalisé les opérations classiques de frasage et de pétrissage de la pâte en respectant les caractéristiques suivantes :

. emploi d'une quantité de levure d'environ au moins deux fois la quantité de levure normalement utilisée ;

. présence dans la pâte de 0,5 à 1°/$_{oo}$, par rapport à la farine, de gluten ;

. présence dans la pâte de 0,5 à 2%, par rapport à la farine, de malt ;

lesdites opérations étant réalisées dans le minimum de temps et sans que la pâte atteigne 20°C ;

- et la pâte obtenue est ensuite refroidie aussi rapidement que possible jusqu'à ce que la température à coeur de ladite pâte soit inférieure à -7°C.

2.          Procédé selon la revendication 1, caractérisé en ce que la farine utilisée est une farine considérée comme non panifiable.

3.          Procédé selon l'une des revendications 1 et 2, caractérisé en ce que les fragments de pâte (pâtons) refroidis à au moins -7°C sont recouverts d'une couche de glace.

4.          Procédé de décongélation biologique des pâtons réfrigérés conservés à -20°C environ, caractérisé en ce que lesdits pâtons sont soumis aux conditions successives suivantes :

- atmosphère saturée d'eau et à température de 90 à 100°C pendant une durée de 3 à 7 minutes ;

- atmosphère à température de 20 à 30°C pendant une durée suffisante pour que la température, à coeur, du pâton atteigne environ 20°C ; puis fermentation dans les conditions connues et cuisson de la pâte.